# EUROPÄISCHE PATENTSCHRIFT

(11) **EP 0 848 890 B1**
(45) Veröffentlichungstag und Bekanntmachung des Hinweises auf die Patenterteilung: **24.01.2001**
(21) Anmeldenummer: 96934367.2
(22) Anmeldetag: 21.08.1996
(51) Int. Cl.: H04Q 7/38

(54) **VERFAHREN UND SYSTEM ZUM AUSSENDEN EINER FUNKRUFNACHRICHT ZU FUNKTEILNEHMERSTATIONEN VON MOBILFUNKTEILNEHMERN**
PROCESS AND SYSTEM FOR TRANSMITTING A RADIO MESSAGE TO MOBILE RADIO SUBSCRIBER STATIONS
PROCEDE ET DISPOSITIF D'EMISSION D'UN MESSAGE DE RECHERCHE DE PERSONNE A DES STATIONS MOBILES

(30) Priorität: 04.09.1995 DE 19532604
(43) Veröffentlichungstag der Anmeldung: 24.06.1998
(73) Patentinhaber: SIEMENS AKTIENGESELLSCHAFT, 80333 München (DE)
(72) Erfinder: MADEMANN, Frank, D-15344 Strausberg (DE)
(86) Internationale Anmeldenummer: DE9601550
(87) Internationale Veröffentlichungsnummer: WO9709837

(56) Entgegenhaltungen:
- EP-A- 0 454 648
- WO-A-93/23965
- WO-A-94/07337
- WO-A-95/28063
- US-A- 5 305 466
- IEEE TRANSACTIONS ON VEHICULAR TECHNOLOGY, Bd. 44, Nr. 3, 1.August 1995, Seiten 543-553, XP000526045 LYBEROPOULOS G L ET AL: "INTELLIGENT PAGING STRATEGIES FOR THIRD GENERATION MOBILE TELECOMMUNICATION SYSTEMS"

## Beschreibung

Die Erfindung betrifft ein Verfahren und ein System zum Aussenden einer Funkrufnachricht zu Funkteilnehmerstationen von Mobilfunkteilnehmern eines zellular aufgebauten Mobilfunknetzes gemäß dem Oberbegriff des Patentanspruchs 1 bzw. des Patentanspruchs 10.

In zellularen Mobilfunknetzen wird der Aufenthaltsort von Funkteilnehmerstationen der Mobilfunkteilnehmer anhand von Aufenthaltsgebieten (location areas) verwaltet, die jeweils aus einer oder mehreren Funkzellen zusammengesetzt und durch eine zugehörige Aufenthaltsgebietskennung (location area identity) identifizierbar sind. Aus der Systembeschreibung "D900-Mobile Communication System", von Huder/Geier, Siemens AG 1992 (Bestellnummer A30808-X3231-X-2-7618) ist ein zellular aufgebautes digitales Mobilfunknetz bekannt, das nach dem GSM-Standard (Global System for Mobile Communication) betrieben wird. Im Falle des Aufbaus einer Verbindung zu den Funkteilnehmerstationen, beispielsweise auf Grund eines aus einem anderen Netz initiierten und an den Mobilfunkteilnehmer gerichteten Anrufs (Mobile Terminated Call), wird in alle Funkzellen des Aufenthaltsgebiets, in dem der gerufene Mobilfunkteilnehmer sich mit seiner Funkteilnehmerstation befindet, eine Funkrufnachricht ausgesendet (Paging). Die Funkrufnachricht dient dazu, den Mobilfunkteilnehmer aufzufordern, sich mit seiner Funkteilnehmerstation im Netz bzw. bei dessen Einrichtungen - der zuständigen Basis-Sende/Empfangsstation - zu melden. Dadurch, daß die Funkrufnachricht immer an alle Funkzellen des bekannten Aufenthaltsgebiets übertragen werden muß, entsteht eine hohe Last sowohl für die von der Signalisierung betroffenen Einrichtungen des Mobilfunknetzes als auch für die Signalisierungskanäle in den Funkzellen. In den Funkzellen wird die Funkrufnachricht auf Steuerkanälen gesendet. Die Signalisierungslast steigt bei einer größer werdenden Anzahl von Funkzellen in einem Aufenthaltsgebiet proportional an.

Aus der internationalen Patentanmeldung W093/23965 ist ein zellulares Kommunikationssystem bekannt, bei dem eine Funkrufnachricht zu Funkteilnehmerstationen innerhalb eines Dienstebereichs (Service Area) ausgesendet werden können (paging). Dabei werden Paging-Bereiche definiert, die aus einer Mehrzahl von Aufenthaltsgebieten (Location Areas) bestehen. Zunächst wird die Funkrufnachricht zum Aufenthaltsgebiet ausgesendet und anschließend für den Fall, daß die Funkrufnachricht unbeantwortet bleibt, in das größere Paging-Gebiet ausgesendet. Eine Information zur Identifikation des aktuellen Aufenthaltsgebiets wird von jeder Funkteilnehmerstation zum Kommunikationssystem ausgesendet.

Aus der der internationalen Patentanmeldung W094/07337 ist ein zellulares Mobilfunknetz bekannt, bei dem für eine Funkteilnehmerstation, die sich in eine bestimmte Zelle eines aus einer oder mehreren Funkzellen bestehenden Paging-Gebiets bewegt, ein teilnehmerspezifisches und temporäres Paging-Gebiet festgelegt wird. Dabei startet ein Zeitgeber für die ausgewählte Funkteilnehmerstation, sobald sie sich in das Paging-Gebiet begibt, und nach Ablauf einer vorgebbaren Zeitdauer wird eine Initialisierungsnachricht aktiviert. Diese Nachricht veranlaßt das Netz, das temporäre Paging-Gebiet zu definieren und in einer Teilnehmerdatenbasis des Netzes zu speichern. Das kleinste Paging-Gebiet umfasst lediglich eine einzige Funkzelle.

Es ist Aufgabe der vorliegenden Erfindung, ein Verfahren und ein System der eingangs genannten Art anzugeben, das ein effektiveres "Paging" ermöglicht.

Diese Aufgabe wird gemäß der Erfindung durch die Merkmale des Patentanspruchs 1 hinsichtlich des Verfahrens und durch die Merkmale des Patentanspruchs 10 hinsichtlich des Systems gelöst. Weiterbildungen der Erfindung sind in Unteransprüchen angegeben.

Demnach wird bei Übertragung von jeweils durch die Funkteilnehmerstation gesendeten Nachrichten eine die aktuelle Funkzelle, in der die Funkteilnehmerstation sich befindet, identifizierende Zellenkennung zusätzlich zur Aufenthaltsgebietskennung in Richtung Mobilfunknetz mitgesendet und in einer Teilnehmerdatenbasis des Mobilfunknetzes gespeichert. Weiterhin wird die Zellenkennung in eine Liste von Zellenkennungen eingetragen, anhand der die Funkrufnachricht gesendet wird. Dies bedeutet, daß ohne zusätzlichen Signalisierungverkehr eine Information über die vom Mobilfunkteilnehmer bzw. der Funkteilnehmerstation genutzte Funkzelle gewonnen werden kann. Die Ableitung der Aufenthaltsinformation auf Funkzellenebene erfolgt somit ohne Erhöhung der Signalisierungslast. Vielmehr kommt es sogar zu einer Reduzierung der Signalisierungslast beim Aussenden der Funkrufnachricht (Paging) dadurch, daß auf Grund der in der Liste gespeicherten Zellenkennungen ein "Paging" zu der oder den zuletzt genutzten Funkzellen und gegebenenfalls zusätzlich zu deren benachbarten Funkzellen durchgeführt wird. Speziell für Funkteilnehmerstationen mit kurz aufeinanderfolgenden Interaktionen mit dem Mobilfunknetz - insbesondere bei Übermittlung von Datenpaketen gemäß einem gesonderten Paketdatendienst (General Packet Radio Service) - oder für quasistationäre Funkteilnehmerstationen - die sich wie drahtgebundene Teilnehmerstationen längere Zeit an demselben Ort befinden - ist die Wahrscheinlichkeit eines Funkzellenwechsels gering. Daher führt das effektive "Paging" zu der bzw. den zuletzt genutzten Funkzellen, die durch die entsprechenden Zellenkennungen identifizierbar sind, zu einer Reduzierung der Signalisierungslast und zu einer Erhöhung der Funkübertragunskapazität beim Aussenden der Funkrufnachricht innerhalb des jeweiligen Aufenthaltsgebiets.

Die Erfindung wird anhand eines in Figuren dargestellten Ausführungsbeispiels näher erläutert. Im einzelnen zeigen
- Figur 1: die Aufenthaltsregistrierung für eine Funkteilnehmerstation bei Aufenthaltsortwechsel von einer Funkzelle in eine andere Funkzelle und
- Figur 2: den Verbindungsaufbau zu einer Funkteilnehmerstation durch Aussenden einer Funkrufnachricht zu der zuletzt genutzten Funkzelle.

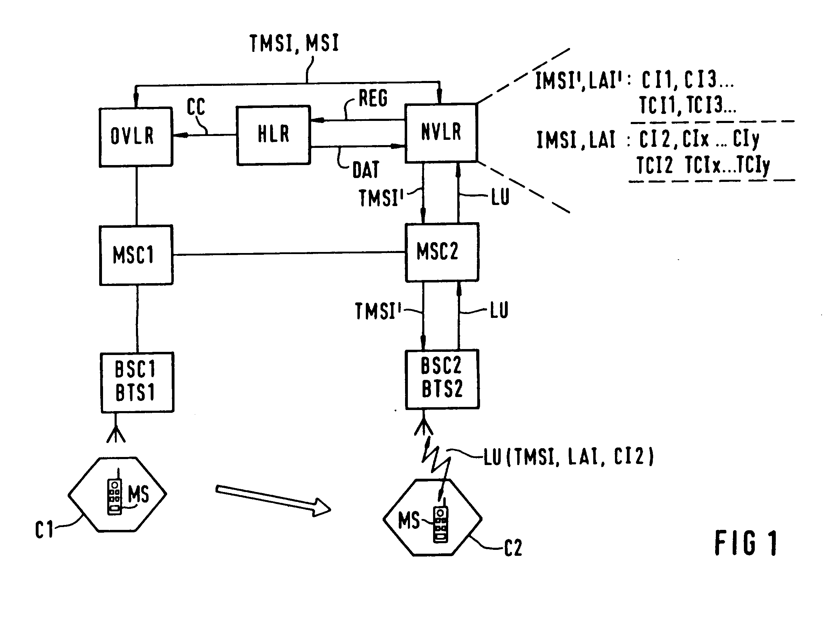

Figur 1 zeigt in einem Blockschaltbild die Aufenthaltsregistrierung bei Aufenthaltsortwechsel eines Mobilfunkteilnehmers mit seiner zugehörigen Funkteilnehmerstation MS von einer Funkzelle C1 zu einer Funkzelle C2 in einem aus einer Vielzahl von Funkzellen aufgebauten digitalen Mobilfunknetz. Dabei wird eine Prozedur zum Start der Aufenthaltsregistrierung von der Funkteilnehmerstation MS veranlaßt, sobald der Mobilfunkteilnehmer sich von einer Funkzelle C1 in die neue Funkzelle C2 bewegt und dadurch von einer neuen Teilnehmerdatenbasis NVLR anstelle einer bisherigen Teilnehmerdatenbasis OVLR bedient wird. In den dezentralen Teilnehmerdatenbasen OVLR und NVLR werden die Teilnehmerdaten von Mobilfunkteilnehmern, die sich jeweils in einem der Teilnehmerdatenbasis zugeordneten Aufenthaltsgebiet aktuell bewegen, für die Dauer des Aufenthalts vorübergehend gespeichert. Die Teilnehmerdaten aller im Mobilfunknetz registrierten Mobilfunkteilnehmer werden zentral in einer Teilnehmerdatenbasis HLR gespeichert, auf die sowohl von der bisherigen dezentralen Teilnehmerdatenbasis OVLR als auch von der neuen dezentralen Teilnehmerdatenbasis NVLR zugegriffen werden kann. An jede dezentrale Teilnehmerdatenbasis OVLR bzw. NVLR ist eine Mobilvermittlungsstelle MSC1 bzw. MSC2 angeschlossen, die untereinander verbunden sind. Die Mobilvermittlungsstelle MSC1, MSC2 übernimmt jeweils die vermittlungstechnischen Funktionen beim Verbindungsaufbau in den zugehörigen Aufenthaltsgebieten. Die Mobilvermittlungsstelle MSC1 ist mit einer Basisstationssteuerung BSC1 verbunden, die mehrere Basis-Sende/Empfangsstationen in dem Aufenthaltsgebiet bedienen kann. Jede Funkzelle des Aufenthaltsgebiets weist eine Basis-Sende/Empfangsstation auf, um Signale über die Luftschnittstelle auszusenden bzw. zu empfangen. Im vorliegenden Beispiel ist in der Funkzelle C1 die Basis-Sende/Empfangsstation BTS1 angeordnet. Ebenso ist mit der Mobilvermittlungsstelle MSC2 eine Basisstationssteuerung BSC2 zur Betreuung der in dem entsprechenden Aufenthaltsgebiet vorgesehenen Basis-Sende/Empfangsstationen verbunden. Im vorliegenden Beispiel befindet sich in der Funkzelle C2 eine Basis-Sende/Empfangsstation BTS2 zum Senden und Empfangen der in der Funkzelle C2 durch die Luft übertragenen Signale.

Wird von der Funkteilnehmerstation MS durch Auswertung benachbarter Basis-Sende/Empfangsstationen festgestellt, daß durch den Wechsel der Funkteilnehmerstation von Funkzelle C1 zur Funkzelle C2 die Informationen über den aktuellen Aufenthaltsort des Mobilfunkteilnehmers in den Teilnehmerdatenbasen zu erneuern sind, sendet die Funkteilnehmerstation MS eine Nachricht LU (Location Update) aus. Die Nachricht LU wird von der Basis-Sende/Empfangsstation BTS2 der neuen Funkzelle C2 empfangen und über die Basisstationssteuerung BSC2 und die Mobilvermittlungsstelle MSC2 zur neuen dezentralen Teilnehmerdatenbasis NVLR weitergeleitet. Mit der Nachricht LU wird zur Identifikation des Mobilfunkteilnehmers eine temporäre Mobilfunkteilnehmerkennung TMSI und zur Identifikation des Aufenthaltsgebiets, zu dem die Funkzelle C2 gehört, eine Aufenthaltsgebietskennung LAI übertragen. Zusätzlich zu diesen Informationen wird von der Funkteilnehmerstation MS eine die aktuelle Funkzelle C2, in der sich die Funkteilnehmerstation MS gerade aufhält, identifizierende Zellenkennung CI2 mitgesendet und in der neuen dezentralen Teilnehmerdatenbasis NVLR gespeichert.

Die Speicherung der Zellenkennung CI2 erfolgt zusammen mit einer den Mobilfunkteilnehmer identifizierenden internationalen Teilnehmerkennung IMSI, die die neue Teilnehmerdatenbasis NVLR von der bisherigen Teilnehmerdatenbasis OVLR anfordert. Zu diesem Zweck wird die temporäre Mobilfunkteilnehmerkennung TMSI zur alten Teilnehmerdatenbasis OVLR ausgesendet. Außer der internationalen Mobilfunkteilnehmerkennung IMSI ist die Aufenthaltsgebietskennung LAI in der Teilnehmerdatenbasis NVLR eingetragen. Für die internationale Mobilfunkteilnehmerkennung IMSI und die Aufenthaltsgebietskennung LAI existiert in der dezentralen Teilnehmerdatenbasis NVLR eine Liste der zuletzt genutzten Funkzellen, erkennbar an den gespeicherten Zellenkennungen CI2, CIx...CIy. Gemeinsam mit den Zellenkennungen CI2... können die zugehörigen Zeitpunkte der Übermittlung der Zellenkennungen CI2... unter der internationalen Mobilfunkteilnehmerkennung IMSI und der Aufenthaltsgebietskennung LAI in der Teilnehmerdatenbasis NVLR registriert werden. Im vorliegenden Beispiel gehören zu den Zellenkennungen CI2, CIx...CIy die entsprechenden Zeitpunkte TCI2, TCIx...TCIy.

Für eine andere internationale Mobilfunkteilnehmerkennung IMSI' und eine andere Aufenthaltsgebietskennung LAI' sind Zellenkennungen CI1, CI3... mit den zugehörigen Zeitpunkten TCI1, TCI3... in der Reihenfolge der zuletzt genutzten Funkzellen in der Teilnehmerdatenbasis NVLR gespeichert. Mit den gespeicherten Zeitpunkten erhält man eine Information zur Verbesserung der Treffsicherheit, mit der der Mobilfunkteilnehmer in einer bestimmten Anzahl von Funkzellen durch die Funkrufnachricht erfolgreich aufgefunden werden kann.

Nach Ausführung einer Authentifikation, mit der die Zugangsberechtigung des Mobilfunkteilnehmers zum Mobilfunknetz überprüft wird, fordert die neue Teilnehmerdatenbasis NVLR in der Anfrage REQ von der zentralen Teilnehmerdatenbasis HLR die Teilnehmerdaten des Mobilfunkteilnehmers an. Die Teilnehmerdatenbasis HLR sendet die entsprechenden Teilnehmerdaten DAT zur anfordernden Teilnehmerdatenbasis NVLR zurück und veranlaßt durch Übertragung einer Nachricht CC zu der bisherigen Teilnehmerdatenbasis OVLR das Löschen der darin eingetragenen alten Teilnehmerdaten. Die neue Teilnehmerdatenbasis NVLR vergibt dem Mobilfunkteilnehmer eine neue temporäre Mobilfunkteilnehmerkennung TMSI', die über die Mobilvermittlungsstelle MSC2 die Basisstationssteuerung BSC2 und die Basis-Sende/Empfangsstation BTS2 zur Funkteilnehmerstation MS in der Funkzelle C2 übertragen wird.

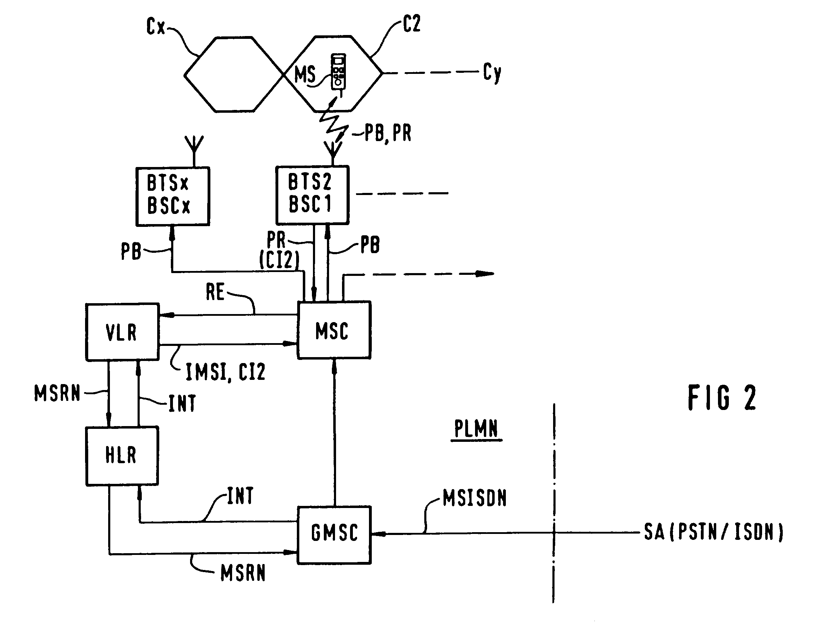

Figur 2 zeigt in einem Blockschaltbild den Verbindungsaufbau bei einem im Mobilfunknetz PLMN ankommenden Anruf, der von einem Teilnehmer SA eines öffentlichen Fernsprechnetzes PSTN oder eines diensteintegrierenden Kommunikationsnetzes ISDN initiiert wurde. Im vorliegenden Beispiel befindet sich der angerufene Mobilfunkteilnehmer mit seiner Funkteilnehmerstation MS in der Funkzelle C2 eines mehrere Funkzellen umfassenden Aufenthaltsgebiets, das anhand einer zugehörigen Aufenthaltsgebietskennung identifizierbar ist. Der rufende Teilnehmer SA, der den momentanen Aufenthaltsort des Mobilfunkteilnehmers in der Regel nicht kennt, wählt eine Rufnummer MSISDN, durch die der Mobilfunkteilnehmer überall im Mobilfunknetz PLMN erreichbar ist. Durch Aussenden der Funkrufnachricht (Paging) wird bewirkt, daß sich der Mobilfunkteilnehmer mit seiner Funkteilnehmerstation MS im Netz meldet. Die Teilnehmerrufnummer MSISDN des Mobilfunkteilnehmers wird von einer Mobilvermittlungsstelle GMSC empfangen, die im Mobilfunknetz PLMN an der Schnittstelle zu anderen Kommunikationsnetzen angeordnet ist. Die Mobilvermittlungsstelle GMSC ermittelt aus der eintreffenden Teilnehmerrufnummer MSISDN die für den angerufenen Mobilfunkteilnehmer richtige zentrale Teilnehmerdatenbasis HLR und baut dorthin eine Signalisierungsverbindung auf. Auf Grund der eingerichteten Signalisierungsverbindung wird eine Anforderung INT (Interrogation) an die dezentrale Teilnehmerdatenbasis VLR gerichtet, in deren zugeordnetem Aufenthaltsgebiet der Mobilfunkteilnehmer sich gerade befindet. Die Teilnehmerdatenbasis VLR sendet als Antwort auf die Anforderung eine Aufenthaltsrufnummer MSRN an die zentrale Teilnehmerdatenbasis HLR zurück, die ihrerseits diese Aufenthaltsrufnummer MSRN an die Mobilvermittlungsstelle GMSC weiterleitet. Auf der Basis der eintreffenden Aufenthaltsrufnummer MSRN baut die Mobilvermittlungsstelle GMSC eine Verbindung zu einer weiteren Mobilvermittlungsstelle MSC auf, die mit der für den angerufenen Mobilfunkteilnehmer zuständigen Teilnehmerdatenbasis VLR verbunden ist.

Da die Mobilvermittlungsstelle MSC den Mobilfunkteilnehmer bis zu diesem Zeitpunkt noch nicht kennt, fordert sie von ihrer Teilnehmerdatenbasis VLR die Teilnehmerdaten des Mobilfunkteilnehmers, die zum Verbindungsaufbau erforderlich sind, anhand einer Nachricht RE an. Die dezentrale Teilnehmerdatenbasis VLR liefert daraufhin die internationale Mobilfunkteilnehmerkennung IMSI und die Zellenkennung CI2 zur Identifikation der zuletzt genutzten Funkzelle C2 und gegebenenfalls weitere Zellenkennungen von Funkzellen, die im bekannten Aufenthaltsgebiet zur Funkzelle C2 benachbart sind. Anhand der zur Mobilvermittlungsstelle MSC übertragenen internationalen Mobilfunkteilnehmerkennung IMSI und Zellenkennung CI2 veranlaßt die Mobilvermittlungsstelle MSC das Aussenden einer Funkrufnachricht PB (Paging Broadcast) zu der durch die Zellenkennung CI2 gekennzeichneten Funkzelle C2 und gegebenenfalls zu deren benachbarten Funkzellen Cx...Cy. Die Funkrufnachricht PB wird durch die zuständige Basisstationssteuerung BSC1 und die in der Funkzelle C2 angeordnete Basis-Sende/Empfangsstation BTS2 zur Funkteilnehmerstation MS übertragen. Benachbarte Funkzellen Cx...Cy erhalten die Funkrufnachricht PB in entsprechender Weise über die Basisstationssteuerung BSCx und die zugehörige Basis-Sende/Empfangsstation BTSx usw..

Für den Fall, daß sich die Funkteilnehmerstation MS des angerufenen Mobilfunkteilnehmers im bekannten Aufenthaltsgebiet noch in der zuletzt genutzten Funkzelle C2 befindet, sendet die Funkteilnehmerstation MS eine Antwortnachricht PR (Paging Response) zur Mobilvermittlungsstelle MSC zurück. Enthält eine der zu der zuletzt genutzten Funkzelle C2 benachbarten Funkzellen Cx...Cy die angerufene Funkteilnehmerstation MS, erfolgt die Rücksendung der Antwortnachricht PB in entsprechender Weise über die entsprechenden Funkeinrichtungen, bestehend aus einer Basis-Sende/Empfangsstation und einer Basisstationssteuerung. Meldet sich die Funkteilnehmerstation MS nicht auf ein "Paging", das an die zuletzt genutzte Funkzelle oder an mehrere zuletzt genutzte Funkzellen und gegebenenfalls an deren jeweils benachbarte Funkzellen gerichtet wurde, so wird die Funkrufnachricht PB von der Mobilvermittlungsstelle MSC an alle Funkzellen des Aufenthaltsgebiets ausgesendet. Bei der Übertragung der Antwortnachricht PR von der gerufenen Funkteilnehmerstation in einer der Funkzellen des Aufenthaltsgebiets wird wiederum die Zellenkennung zur Identifikation dieser Funkzelle, in der die Funkteilnehmerstation MS vorhanden ist, mitgesendet. Im vorliegenden Beispiel enthält somit die Antwortnachricht PR die Zellenkennung CI2 der zuletzt genutzten Funkzelle C2, da sich die Funkteilnehmerstation MS darin befindet.

Die ohne zusätzlichen Signalisierungsverkehr übertragbare Zellenkennung zur Identifikation der aktuellen Funkzelle in einem Aufenthaltsgebiet ermöglicht ein effektives "Paging", bei dem entweder zu der zuletzt genutzten Funkzelle oder zu mehreren zuletzt genutzten Funkzellen und gegebenenfalls zu deren jeweiligen Nachbarfunkzellen die Funkrufnachricht ausgesendet wird. Speziell für Funkteilnehmerstationen mit kurz aufeinanderfolgenden Interaktionen mit dem Mobilfunknetz, beispielsweise bei Übertragung von Datenpaketen gemäß einem gesonderten Paketdatendienst (General Packet Radio Service) im Mobilfunknetz, oder bei stationären Funkteilnehmerstationen, die vom Mobilfunkteilnehmer als Ersatz für drahtgedrahtgebundene Festnetzteilnehmerstationen verwendet werden, hat die vorliegende Erfindung den Vorteil einer Reduzierung der Signalisierungslast beim "Paging" der Funkteilnehmerstationen und einer Erhöhung der Pagingkapazität im jeweiligen Aufenthaltsgebiet. Darüber hinaus kann die Zellenkennung zur Identifikation der jeweiligen Funkzelle ohne Erhöhung der Signalisierungslast im Mobilfunknetz abgeleitet werden. Der zusätzliche Speicheraufwand zur Registrierung der Zellenkennungen einschließlich der zugehörigen Zeitpunkte des Aussendens in den jeweiligen dezentralen Teilnehmerdatenbasen kann dabei je nach Anzahl von Funkzellen und Größe des Aufenthaltsgebiets in Grenzen gehalten werden. Das Verfahren zur Übertragung von Datenpaketen gemäß dem Paketdatendienst in einem Mobilfunknetz ist beispielsweise in der deutschen Patentschrift DE 19 524 659 C1 beschrieben.

## Patentansprüche

1. Verfahren zum Aussenden einer Funkrufnachricht (PB) zu Funkteilnehmerstationen (MS) von Mobilfunkteilnehmern eines zellular aufgebauten Mobilfunknetzes (PLMN), bei dem der Aufenthaltsort der Funkteilnehmerstationen (MS) durch jeweils aus mindestens einer Funkzelle (C1...) bestehende und durch eine Aufenthaltsgebietskennung (LAI) identifizierbare Aufenthaltsgebiete verwaltet wird, und bei dem die Funkteilnehmerstationen (MS) in einem Aufenthaltsgebiet jeweils durch das Aussenden der Funkrufnachricht (PB) gerufen werden,
**dadurch gekennzeichnet**,
daß bei Übertragung von jeweils durch die Funkteilnehmerstation (MS) gesendeten Nachrichten (LU, PR) eine die aktuelle Funkzelle (z.B. C2), in der sich die Funkteilnehmerstation (MS) gerade befindet, identifizierende Zellenkennung (z.B. CI2) zusätzlich zur Aufenthaltsgebietskennung (LAI) mitgesendet und in einer Teilnehmerdatenbasis (NVLR, VLR) des Mobilfunknetzes (PLMN) gespeichert wird, und
daß die Zellenkennung (z.B. CI2) in eine Liste von Zellenkennungen (CI2, CIx...CIy) eingetragen wird, anhand der die Funkrufnachricht (PB) gesendet wird.

2. Verfahren nach Anspruch 1,
**dadurch gekennzeichnet**,
daß die Funkrufnachricht (PB) zu der zuletzt genutzten Funkzelle (z.B. C2), die durch die gespeicherte Zellenkennung (CI2) festgelegt ist, ausgesendet wird.

3. Verfahren nach Anspruch 1,
**dadurch gekennzeichnet**,
daß die Funkrufnachricht (PB) zu mehreren zuletzt genutzten Funkzellen (z.B. C2...Cy), die durch die gespeicherten Zellenkennungen (z.B. CI2...CIy) festgelegt sind, ausgesendet wird.

4. Verfahren nach Anspruch 1,
**dadurch gekennzeichnet**,
daß die Funkrufnachricht (PB) zu der zuletzt genutzten Funkzelle (z.B. C2) und zusätzlich zu deren benachbarten Funkzellen (z.B. Cx), die durch die gespeicherten Zellenkennungen (z.B. CI2, CIx) festgelegt sind, ausgesendet wird.

5. Verfahren nach einem der vorhergehenden Ansprüche,
**dadurch gekennzeichnet**,
daß zur Erhöhung der Treffsicherheit beim Rufen der Funkteilnehmerstation (MS) der Zeitpunkt (z.B. TCI2) der Übermittlung der Zellenkennung (z.B. CI2) in der Teilnehmerdatenbasis (NVLR, VLR) zusammen mit der Zellenkennung (CI2) gespeichert wird.

6. Verfahren nach einem der vorhergehenden Ansprüche,
**dadurch gekennzeichnet**,
daß bei Ausbleiben einer von einer Funkteilnehmerstation (MS) rücksendbaren Antwortnachricht (PR) die Funkrufnachricht (PB) zu allen Funkzellen (C2...) des Aufenthaltsgebiets ausgesendet wird.

7. Verfahren nach einem der vorhergehenden Ansprüche,
**dadurch gekennzeichnet**,
daß die Zellenkennung (z.B. CI2) und der Zeitpunkt (z.B. TCI2) der Übermittlung der Zellenkennung (z.B. CI2) in einer dezentralen Teilnehmerdatenbasis (NVLR, VLR) gespeichert werden, die für die in einem zugeordneten Aufenthaltsgebiet sich befindenden Funkteilnehmerstationen (MS) zuständig ist.

8. Verfahren nach einem der vorhergehenden Ansprüche,
**dadurch gekennzeichnet**,
daß die Zellenkennung (z.B. CI2) und der Zeitpunkt (z.B. TCI2) der Übermittlung der Zellenkennung (z.B. CI2) zusammen mit einer den Mobilfunkteilnehmer identifizierenden Teilnehmerkennung (IMSI, IMSI') in der Teilnehmerdatenbasis (NVLR, VLR) gespeichert werden.

9. Verfahren nach einem der vorhergehenden Ansprüche,
**dadurch gekennzeichnet**,
daß die Zellenkennung (z.B. C2) jeweils in Datenpaketen mitgesendet wird, die gemäß einem Datenpaketdienst im Mobilfunknetz übertragen werden.

10. System zum Aussenden einer Funkrufnachricht (PB) zu Funkteilnehmerstationen (MS) von Mobilfunkteilnehmern in Aufenthaltsgebieten eines zellular aufgebauten Mobilfunknetzes (PLMN), wobei die Aufenthaltsgebiete jeweils Aufenthaltsorte der Funkteilnehmerstationen (MS) verwalten, aus mindestens einer Funkzelle (C1...) bestehen und durch eine Aufenthaltsgebietskennung (LAI) identifizierbar sind,
**dadurch gekennzeichnet**,
daß die Funkteilnehmerstationen (MS) über Mittel zum Senden von Nachrichten (LU, PR) verfügt, die jeweils zusätzlich zur Aufenthaltsgebietskennung (LAI) eine die aktuelle Funkzelle (z.B. C2), in der sich die Funkteilnehmerstation (MS) gerade befindet, identifizierende Zellenkennung (z.B. CI2) enthalten, und
daß das Mobilfunknetz (PLMN) eine oder mehrere Teilnehmerdatenbasen (NVLR, VLR) aufweist, in der die zusätzlich übertragene Zellenkennung (z.B. CI2) in einer Liste von Zellenkennungen (CI2, CIx...CIy) eingetragen ist, anhand der die Funkrufnachricht (PB) gesendet wird.

11. System nach Anspruch 10,
**dadurch gekennzeichnet**,
daß das Mobilfunknetz (PLMN) über Mittel zum Senden der Funkrufnachricht (PB) zu der zuletzt genutzten Funkzelle (z.B. C2), die durch die eingetragene Zellenkennung (CI2) festgelegt ist, verfügt.

12. System nach Anspruch 10,
**dadurch gekennzeichnet**,
das Mobilfunknetz (PLMN) über Mittel zum Senden der Funkrufnachricht (PB) zu mehreren zuletzt genutzten Funkzellen (z.B. C2...Cy), die durch die eingetragenen Zellenkennungen (z.B. CI2...CIy) festgelegt sind, verfügt.

13. System nach Anspruch 10,
**dadurch gekennzeichnet**,
das Mobilfunknetz (PLMN) über Mittel zum Senden der Funkrufnachricht (PB) zu der zuletzt genutzten Funkzelle (z.B. C2) und zusätzlich zu deren benachbarten Funkzellen (z.B. Cx), die durch die eingetragenen Zellenkennungen (z.B. CI2, CIx) festgelegt sind, verfügt.

## Claims

1. A method for sending out a paging broadcast (PB) to mobile stations (MS) of mobile subscribers of a mobile radio network (PLMN) having a cellular structure, in which the location of the mobile stations (MS) is administered by location areas consisting of in each case at least one radio cell (C1...) and identifiable by a location area identity (LAI), and in which the mobile stations (MS) in a location area are in each case called by the sending out of the paging broadcast (PB), characterized in that during the transmission of messages (LU, PR) in each case sent by the mobile station (MS) a cell identity (e.g. CI2) identifying the current radio cell (e.g. C2), in which the mobile station (MS) happens to located, is sent along additionally to the location area identity (LAI) and is stored in a subscriber database (NVLR, VLR) of the mobile radio network (PLMN), and in that the cell identity (e.g. CI2) is entered in a list of cell identities (CI2, CIx...CIy) by means of which the paging broadcast (PB) is sent.

2. The method as claimed in Claim 1, characterized in that the paging broadcast (PB) is sent out to the radio cell (e.g. C2) used last, which is specified by the stored cell identity (CI2).

3. The method as claimed in Claim 1, characterized in that the paging broadcast (PB) is sent out to a number of radio cells (e.g. C2...Cy) used last, which are defined by the stored cell identities (e.g. CI2...CIy).

4. The method as claimed in Claim 1, characterized in that the paging broadcast (PB) is sent out to the radio cell (e.g. C2) used last and additionally to its neighbouring radio cells (e.g. Cx), which are defined by the stored cell identities (e.g. CI2, CIx).

5. The method as claimed in one of the preceding claims, characterized in that, in order to increase the probability when calling the mobile station (MS), the time (e.g. TCI2) of the transmission of the cell identity (e.g. CI2) to the subscriber database (NVLR, VLR) is stored together with the cell identity (CI2).

6. The method as claimed in one of the preceding claims, characterized in that, in the absence of a paging response (PR), which can be sent back by a mobile station (MS), the paging broadcast (PB) is sent out to all radio cells (C2...) of the location area.

7. The method as claimed in one of the preceding claims, characterized in that the cell identity (e.g. CI2) and the time (e.g. TCI2) of the transmission of the cell identity (e.g. CI2) are stored in a local subscriber database (NVLR, VLR) which is responsible for the mobile stations (MS) located in an associated location area.

8. The method as claimed in one of the preceding claims, characterized in that the cell identity (e.g. CI2) and the time (e.g. TCI2) of the transmission of the cell identity (e.g. CI2), together with a subscriber identity (IMSI, IMSI') identifying the mobile subscriber, are stored in the subscriber database (NVLR, VLR).

9. The method as claimed in one of the preceding claims, characterized in that the cell identity (e.g. C2) is in each case sent along in data packets which are transmitted in accordance with a data packet service in the mobile radio network.

10. A system for sending out a paging broadcast (PB) to mobile stations (MS) of mobile subscribers in location areas of a mobile radio network (PLMN) having a cellular structure, the location areas in each case administering locations of the mobile stations (MS), consisting of at least one radio cell (C1...) and being identifiable by a location area identity (LAI), characterized in that the mobile stations (MS) have means for sending messages (LU, PR) which in each case contain, in addition to the location area identity (LAI), a cell identity (e.g. CI2) identifying the current radio cell (e.g. C2) in which the mobile station (MS) happens to be located, and in that the mobile radio network (PLMN) exhibits one or more subscriber databases (NVLR, VLR) in which the cell identity (e.g. CI2) additionally to be transmitted is entered in a list of cell identities (CI2, CIx...CIy) by means of which the paging broadcast (PB) is sent.

11. The system as claimed in Claim 10, characterized in that the mobile radio network (PLMN) has means for sending the paging broadcast (PB) to the radio cell (e.g. C2) used last, which is specified by the cell identity (CI2) entered.

12. The system as claimed in Claim 10, characterized in that the mobile radio network (PLMN) has means for sending the paging broadcast (PB) to a number of radio cells (e.g. C2...Cy) used last, which are specified by the cell identities (e.g. CI2...CIy) entered.

13. The system as claimed in Claim 10, characterized in that the mobile radio network (PLMN) has means for sending the paging broadcast (PB) to the radio cell (e.g. C2) used last and additionally to its neighbouring radio cells (e.g. Cx) which are specified by the cell identities (e.g. CI2, CIx) entered.

## Revendications

1. Procédé pour émettre un message de recherche (PB) vers des postes d'usagers radio mobiles (MS) d'un réseau cellulaire de radio mobile (PLMN) dans lequel la position des postes mobiles (MS) est gérée par zones géographiques, comprenant chacune au moins une cellule radio (C1 ...) et qui peuvent être identifiées grâce à un code de zone géographique (LAI), et dans lequel les postes mobiles (MS) situés dans une zone géographique sont respectivement appelés par émission du message de recherche (PB)
**caractérisé par le fait**
que, lors de la transmission de messages (LU, PR) émis respectivement par le poste mobile (MS), un code de cellule (par ex. CI2), qui identifie la cellule actuelle (par ex. C2), dans laquelle se trouve justement le poste mobile (MS), est émis, en plus du code de zone géographique de séjour (LAI), et mémorisé dans une base de données des usagers (NVLR, VLR) du réseau de radio mobile (PLMN) et que le code de cellule (par ex. CI2) est inscrit dans une liste de codes de cellule (CI2, CIx, ..., CIy) à l'aide de laquelle est envoyé le message de recherche (PB).

2. Procédé selon la revendication 1
**caractérisé par le fait**
que le message de recherche (PB) est émis vers la cellule radio utilisée en dernier (par ex. C2) qui est définie grâce au code de cellule mémorisé (CI2).

3. Procédé selon la revendication 1
**caractérisé par le fait**
que le message de recherche (PB) est émis vers plusieurs cellules radio utilisées en dernier (par ex. C2, ..., Cy) qui sont définies grâce aux codes de cellule mémorisés (par ex. CI2 CIy).

4. Procédé selon la revendication 1
**caractérisé par le fait**
que le message de recherche (PB) est émis vers les cellules radio utilisées en dernier (par ex. C2) et, en plus, vers leurs cellules radio voisines (par ex. Cx) qui sont définies grâce aux codes de cellule mémorisés (par ex. CI2, ..., CIy).

5. Procédé selon l'une des revendications précédentes
**caractérisé par le fait**
que, pour augmenter la précision de recherche lors de l'appel du poste mobile (MS), on mémorise, dans la base de données des usagers (NVLR, VLR), en même temps que le code de cellule (CI2), la date précise (par ex. TCI2) de la transmission du code de cellule (par ex. CI2).

6. Procédé selon l'une des revendications précédentes
**caractérisé par le fait**
que, si on ne reçoit pas de message de réponse (PR) renvoyé par un poste mobile (MS), le message de recherche (PB) est envoyé à toutes les cellules radio (C2, ...) de la zone géographique de séjour.

7. Procédé selon l'une des revendications précédentes
**caractérisé par le fait**
que le code de cellule (par ex. CI2) et la date précise (par ex. TCI2) de la transmission du code de cellule (par ex. CI2) sont mémorisés dans une base décentralisée de données des usagers (NVLR, VLR) compétente pour les postes mobiles (MS), qui se trouvent dans une zone géographique de séjour correspondante.

8. Procédé selon l'une des revendications précédentes
**caractérisé par le fait**
que le code de cellule (par ex. CI2) et la date précise (par ex. TCI2) de la transmission du code de cellule (par ex. CI2) sont mémorisés dans la base de données des usagers (NVLR, VLR) en commun avec un code d'usager (IMSI, IMSI') qui identifie l'usager du mobile.

9. Procédé selon l'une des revendications précédentes
**caractérisé par le fait**
que le code de cellule (par ex. C2) est également envoyé dans les paquets de données transmis dans le réseau de radio mobile conformément à un service de transmission par paquets.

10. Système pour émettre un message de recherche (PB) vers des postes d'usagers mobiles (MS) situés dans des zones géographiques d'un réseau cellulaire de radio mobile (PLMN), dans lequel les zones géographiques gèrent respectivement la position des postes mobiles (MS), se composent d'au moins une cellule radio (C1, ...) et peuvent être identifiées grâce à un code de zone géographique (LAI),
**caractérisé par le fait**
que les postes de radio mobiles (MS) disposent de moyens pour émettre des messages (LU, PR), qui comprennent chacun, en plus du code de zone géographique (LAI), un code de cellule radio (par ex. CI2), qui identifie la cellule radio actuelle (par ex. C2) dans laquelle se trouve justement le poste mobile (MS), et que le réseau de radio mobile (PLMN) comporte une ou plusieurs bases de données des usagers (NVLR, VLR), dans laquelle est inscrit le code de cellule (par ex. CI2), transmis en complément, dans une liste de codes de cellules (CI2, CIx, ..., CIy) à l'aide de laquelle est transmis le message de recherche (PB).

11. Système selon la revendication 10
**caractérisé par le fait**
que le réseau de radio mobile (PLMN) dispose de moyens pour émettre le message de recherche (PB) à la cellule radio utilisée en dernier (par ex. C2), qui est déterminée par le code de cellule enregistré (CI2).

12. Système selon la revendication 10
**caractérisé par le fait**
que le réseau de radio mobile (PLMN) dispose de moyens pour envoyer le message de recherche (PB) à plusieurs cellules radio utilisées en dernier (par ex. C2, ..., Cy), qui sont déterminées par les codes de cellule enregistrés (par ex. CI2, ..., CIy).

13. Système selon la revendication 10
**caractérisé par le fait**
que le réseau de radio mobile (PLMN) dispose de moyens pour envoyer le message de recherche (PB) à la cellule radio utilisée en dernier (par ex. C2) et, en complément, aux cellules radio voisines (par ex. Cx), qui sont déterminées par les codes de cellule enregistrés (par ex. CI2, CIx).
